# FASCICULE DE BREVET EUROPEEN

(11) **EP 3 847 673 B1**
(45) Date de publication et mention de la délivrance du brevet: **31.08.2022**
(21) Numéro de dépôt: 18845294.0
(22) Date de dépôt: 09.10.2018
(51) Int. Cl.: G21C 3/62, G21C 19/48, G21C 21/00, C01G 43/00, C01G 43/025

(54) **INSTALLATION DE PRODUCTION DE POUDRE DE COMBUSTIBLE NUCLEAIRE**
AUSRÜSTUNG ZUR HERSTELLUNG VON KERNBRENNSTOFFPULVER
EQUIPMENT FOR PRODUCING NUCLEAR FUEL POWDER

(43) Date de publication de la demande: 14.07.2021
(73) Titulaire: Framatome, 92400 Courbevoie (FR)
(72) Inventeur: PERRIN, Serge, 73450 Valloire (FR); ROUQUETTE Pascal, 26130 Montsegur-sur-Lauzon (FR)
(74) Mandataire: Lavoix
(86) Numéro de dépôt international: PCT/FR2018/052498
(87) Numéro de publication internationale: WO 2020/074793

(56) Documents cités:
- EP-A2- 0 148 707
- US-A- 3 925 965
- US-A- 4 112 055

## Description

La présente invention concerne le domaine de la production de poudre de dioxyde d'uranium (UO₂), destinée notamment à la fabrication de pastilles d'UO₂ pour crayons de combustible nucléaire.

Il est possible d'enrichir de l'uranium sous forme d'hexafluorure d'uranium (UF₆). Il est cependant nécessaire ensuite de convertir l'UF₆ en UO₂ pour fabriquer des pastilles d'UO₂.

Pour ce faire, il est possible de convertir de l'UF₆ gazeux en oxyfluorure d'uranium (UO₂F₂) par hydrolyse dans un réacteur, en injectant de l'UF₆ gazeux et de la vapeur d'eau sèche dans le réacteur pour obtenir de la poudre d'UO₂F₂, puis de convertir la poudre d'UO₂F₂ en poudre d'UO₂ par pyrohydrolyse dans un four, en faisant circuler la poudre d'UO₂F₂ dans le four et en injectant de la vapeur d'eau sèche et du dihydrogène (H₂) gazeux dans le four.

US6136285 et US4112055 divulguent une installation de conversion d'UF₆ en UO₂ comprenant un réacteur d'hydrolyse et un four de pyrohydrolyse pour la mise en oeuvre d'un tel procédé de conversion.

La poudre d'UO₂ obtenue doit être conditionnée pour pouvoir être transférée et utilisée pour la fabrication de pastilles de combustible nucléaire. Cependant, la poudre d'UO₂ est volatile et peut facilement se disperser dans l'atmosphère et contaminer l'installation de conversion d'UF₆ en UO₂.

Pour des raisons de propreté radiologique et de sécurité des opérateurs intervenant sur l'installation de conversion, il convient de limiter le risque de dispersion de matière fissile.

Un des buts de l'invention est de proposer une installation de production de poudre de combustible nucléaire qui permette de limiter les risques de contaminations avec de l'uranium.

A cet effet, l'invention propose une installation de production de poudre de combustible nucléaire comprenant
- une installation de conversion d'hexafluorure d'uranium (UF₆) en dioxyde d'uranium (UO₂), l'installation de conversion comprenant :
   - un réacteur d'hydrolyse pour la conversion d'UF₆ en poudre d'oxyfluorure d'uranium (UO₂F₂) par réaction entre de l'UF₆ gazeux et de la vapeur d'eau sèche injectés dans le réacteur; et
   - un four de pyrohydrolyse pour la conversion de la poudre d'UO₂F₂ en poudre d'UO₂ par réaction de la poudre d'UO₂F₂ avec de la vapeur d'eau sèche et du dihydrogène (H₂) gazeux circulant dans le four; et
- un ensemble de conditionnement de la poudre d'UO₂, l'ensemble de conditionnement comprenant une station de remplissage d'un récipient avec de la poudre d'UO₂, la station de remplissage comprenant une enceinte de confinement, un conduit de remplissage alimenté en poudre d'UO₂ à partir du four et ayant une sortie débouchant dans l'enceinte de confinement, et un système d'aspiration comprenant un anneau d'aspiration disposé à la sortie du conduit de remplissage pour aspirer un flux d'air annulaire autour d'un flux de poudre d'UO₂ tombant de la sortie du conduit de remplissage dans le récipient.

Selon des modes de réalisation particuliers, l'installation de conversion peut comprendre une ou plusieurs des caractéristiques optionnelles suivantes, prises isolément ou selon toutes les combinaisons techniquement possibles :
- la station de remplissage comprend un système de ventilation pour mettre en dépression l'enceinte de confinement et aspirer et filtrer l'air présent dans l'enceinte de confinement ;
- l'enceinte de confinement est une cabine comprenant une porte pour introduire ou extraire le récipient dans ou hors de la cabine ;
- elle comprend un système d'alarme comprenant un capteur disposé dans l'enceinte de confinement pour mesurer la pression dans l'enceinte de confinement et une alarme pour émettre un signal d'alarme en cas de surpression à l'intérieur de l'enceinte de confinement ;
- l'enceinte de confinement est équipée d'un dispositif de contrôle de contamination radioactive disposé dans l'enceinte de confinement pour réaliser un contrôle de la contamination à l'intérieur de l'enceinte de confinement ;
- elle comprend au moins deux pots de stockage de poudre d'UO₂ et un distributeur pour distribuer la poudre d'UO₂ successivement vers les pots de stockage, le conduit de remplissage étant alimenté successivement à partir des pots de stockage ;
- le distributeur possède une cuve à fond plat et au moins une racle de raclage du fond de la cuve ;
- le distributeur comprend des ouvertures de sortie pour la poudre d'UO₂ ménagées dans le fond de la cuve, chaque ouverture de sortie alimentant un pot de stockage respectif ;
- elle comprend un dispositif d'injection de gaz neutre configuré pour injecter un gaz neutre à l'intérieur du distributeur ;
- elle comprend une station de retournement pour retourner et vider un récipient rempli d'UO₂ ;
- la station de retournement comprend un système d'aspiration comprenant un anneau d'aspiration disposé pour être situé à proximité d'une ouverture d'entrée d'un récipient retourné par la station de retournement ;
- la station de retournement comprend un châssis, un porte-récipient pour saisir un récipient, au moins un bras de levage monté pivotant sur le châssis et portant le porte-récipient, et un mécanisme de retournement pour commander une rotation du porte-récipient par rapport au bras de levage, le mécanisme de retournement étant configuré de telle manière que la rotation du bras de levage par rapport au châssis provoque la rotation du porte-récipient par rapport au bras de levage ;
- le mécanisme de retournement comprend un premier pignon monté rotatif sur le bras de levage en étant assujetti en rotation au châssis, un deuxième pignon monté rotatif sur le bras de levage en étant assujetti en rotation au porte-récipient, et un mécanisme d'entraînement reliant le premier pignon au deuxième pignon ;
- la station de retournement comprend un dispositif de blocage disposé sur le châssis pour bloquer le récipient en position retournée ;
- la station de retournement comprend un capteur de présence pour détecter la présence du récipient en position retournée, le récipient comprenant un système d'ouverture pour ouvrir ou fermer le récipient, la station de retournement étant configurée pour ouvrir le système d'ouverture seulement lorsque la présence du récipient en position retournée est détectée par le capteur de présence ;
- elle comprend un joint d'étanchéité disposé à l'entrée du four, un joint d'étanchéité disposé à la sortie du four et/ou un joint d'étanchéité disposé entre le réacteur et un dispositif de transfert configuré pour transférer la poudre d'UO₂F₂ du réacteur vers le four, l'installation étant configurée pour la mise en pression du ou de chaque joint d'étanchéité avec un gaz neutre ;
- elle est configurée pour l'injection d'un gaz neutre dans le réacteur pour la réalisation de la conversion d'UF₆ en poudre d'UO₂F₂ sous atmosphère de gaz neutre ; et
- le gaz neutre est de l'azote (N₂).

L'invention et ses avantages seront mieux compris à la lecture de la description qui va suivre, donnée uniquement à titre d'exemple, et faite en référence aux dessins annexés, sur lesquels :
- la Figure 1 est une vue schématique d'une installation de production de poudre de combustible nucléaire ;
- la Figure 2 est une vue schématique d'un détail d'une station de remplissage de l'installation de production de poudre de combustible nucléaire de la Figure 1, montrant le système d'aspiration des particules en suspension lors du remplissage d'un récipient avec de la poudre d'UO₂ ;
- la Figure 3 est une vue de détail d'un distributeur de l'installation de production de poudre de combustible nucléaire de la Figure 1 ;
- la Figure 4 est une vue schématique en perspective d'une station de retournement d'un récipient contenant de la poudre d'UO₂ ;
- les Figures 5 et 6 sont des vues schématiques de côté de la station de retournement de la Figure 4, la station de retournement étant dans deux configurations distinctes.

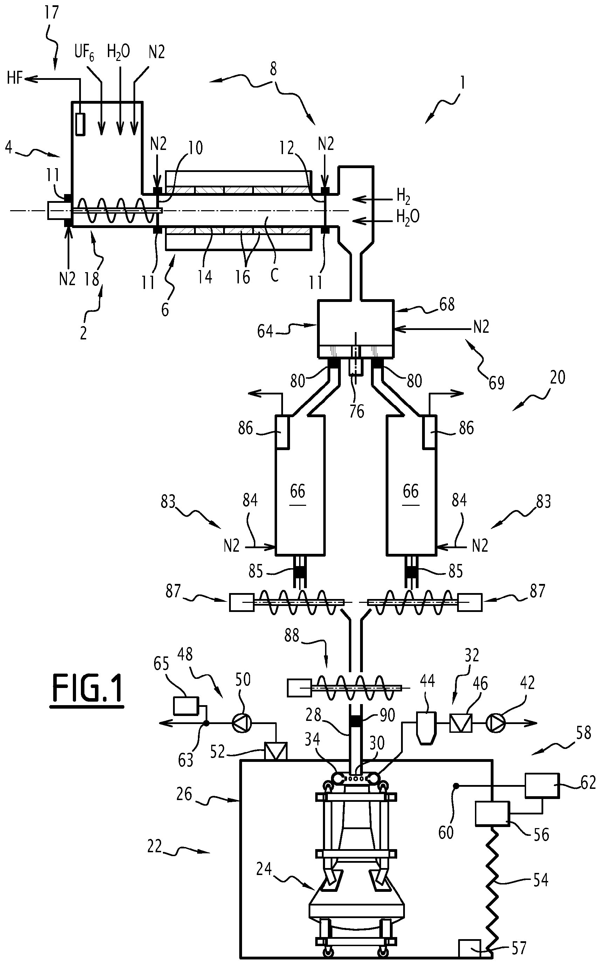

Telle qu'illustrée sur la Figure 1, l'installation de production de poudre de combustible nucléaire 1 comprend une installation de conversion 2 configurée pour la conversion d'UF₆ en UO₂.

L'installation de conversion 2 comprend un réacteur 4 d'hydrolyse pour la conversion d'UF₆ en poudre d'UO₂F₂, par réaction entre de l'UF₆ gazeux et de la vapeur d'eau sèche (H₂O) injectés dans le réacteur 4.

L'installation de conversion 2 comprend un four 6 de pyrohydrolyse pour la conversion de la poudre d'UO₂F₂ en poudre d'UO₂ par réaction de la poudre d'UO₂F₂ avec de la vapeur d'eau sèche de pyrohydrolyse (H₂O) et de l'H₂ gazeux injectés dans le four 6.

L'installation de conversion 2 comprend un dispositif d'alimentation 8 configuré pour injecter des gaz réactifs (UF₆ gazeux, vapeur d'eau sèche et H₂ gazeux) dans le réacteur 4 et dans le four 6.

Le dispositif d'alimentation 8 est en outre configuré pour injecter un gaz neutre dans le réacteur 4 de façon que la conversion d'UF₆ en UO₂ s'effectue sous une atmosphère de gaz neutre. Le gaz neutre est de préférence de l'azote (N₂).

L'UF₆ et la vapeur d'eau sèche injectés dans le réacteur 4 forment une poudre d'UO₂F₂ qui tombe au fond du réacteur 4.

Le four 6 comprend une entrée 10 raccordée au réacteur 4 pour recevoir la poudre d'UO₂F₂ et une sortie 12 pour délivrer la poudre d'UO₂.

L'installation de conversion 2 comprend des joints d'étanchéité 11 au niveau respectivement de l'entrée 10 du four 6 et de la sortie 12 du four 6, pour réaliser une étanchéité à l'entrée 10 du four 6 et à la sortie 12 du four 6.

Le four 6 est un four continu configuré pour que la poudre d'UO₂F₂ avance dans le four 6 de l'entrée 10 vers la sortie 12 en étant exposée à la vapeur d'eau sèche (H₂O) et à l'H₂ gazeux injectés dans le four 6.

L'installation de conversion 2 est ici configurée pour la circulation de la vapeur d'eau sèche (H₂O) et l'H₂ gazeux injectés dans le four 6 à contre-courant de la poudre d'UO₂F₂, i.e. de la sortie 12 vers l'entrée 10. Le dispositif d'alimentation 8 est configuré pour l'injection de la vapeur d'eau sèche de (H₂O) et de l'H₂ gazeux dans le four 6 par la sortie 12 du four 6.

Le four 6 comprend un tambour 14 rotatif s'étendant suivant un axe central C et ayant une première extrémité et une deuxième extrémité opposées formant respectivement l'entrée 10 et la sortie 12. Le tambour 14 est incliné de manière que l'entrée 10 est plus élevée que la sortie 12. En fonctionnement, du fait de l'inclinaison et de la rotation du tambour 14, la poudre d'UO₂F₂ avance de l'entrée 10 vers la sortie 12.

Le four 6 comprend des éléments chauffants 16 pour chauffer le tambour 14. Dans l'exemple illustré, les éléments chauffant 16 entourent le tambour 14.

L'installation de conversion 2 comprend un dispositif de récupération 17 pour récupérer les gaz réactifs en excès, le gaz inerte et les coproduits gazeux résultant de la conversion, à savoir le fluorure d'hydrogène HF.

Le dispositif de récupération 17 ici disposé dans le réacteur 4 pour récupérer les gaz présents dans le réacteur 4 et les gaz qui remontent du four 6 dans le réacteur 4 du fait de la circulation à contre-courant des gaz dans le four 6.

L'installation de conversion 2 comprend un dispositif de transfert 18 pour transférer la poudre d'UO₂F₂ du fond du réacteur 4 vers l'entrée 10 du four 6. Le dispositif de transfert 18 est ici une vis sans fin motorisée.

L'installation de conversion 2 comprend un joint d'étanchéité 11 agencé pour réaliser une étanchéité entre le dispositif de transfert 18 et le réacteur 4, plus précisément entre le dispositif de transfert 18 une ouverture du réacteur 4 par laquelle le dispositif de transfert 18 s'insère dans le réacteur 4.

L'installation de conversion 2 est configurée pour la mise en pression de chaque joint d'étanchéité 11 par injection continue d'un gaz neutre, de préférence de l'azote (N₂), de préférence à une pression supérieure à celle existant dans l'installation de conversion 2.

L'injection d'un gaz neutre au niveau des joints d'étanchéité 11 disposés à l'entrée 10, à la sortie 12 du four et/ou entre le réacteur 4 et le dispositif de transfert 18, à une pression supérieure à celle existant dans l'installation de conversion 2 permet d'empêcher les produits réactifs et les produits de réaction de s'échapper hors de l'installation de conversion 2 et garantit le confinement desdits produits dans l'installation de conversion 2.

L'installation de conversion 2 comprend un ensemble de conditionnement 20 pour le conditionnement de la poudre d'UO₂ issue du four 6.

Le réacteur 4 et le four 6 sont prévus pour fonctionner en continu, et produire de la poudre d'UO₂ en continu. L'ensemble de conditionnement 20 est configuré pour le remplissage de récipients avec la poudre d'UO₂ fournie en continu par le réacteur 4 et le four 6.

L'ensemble de conditionnement 20 comprend une station de remplissage 22 d'un récipient 24 avec de la poudre d'UO₂.

La station de remplissage 22 comprend une enceinte de confinement 26, un conduit de remplissage 28 alimenté en poudre d'UO₂ à partir du four 6 et ayant une sortie 30 débouchant dans l'enceinte de confinement 26, et un système d'aspiration 32.

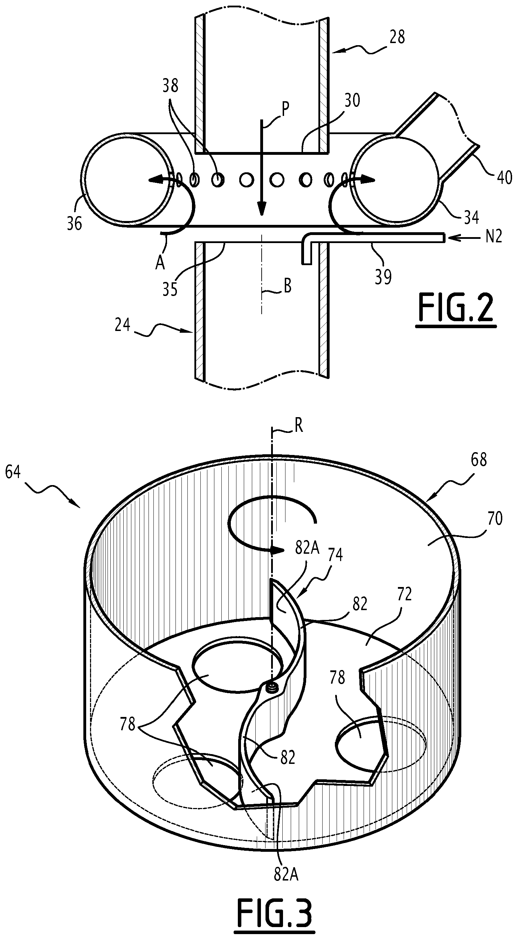

Comme visible sur la Figure 2, le système d'aspiration 32 comprend un anneau d'aspiration 34 disposé à la sortie 30 du conduit de remplissage 28 pour aspirer un flux A d'air annulaire autour d'un flux P de poudre d'UO₂ tombant de la sortie 30 du conduit de remplissage 28 dans une ouverture d'entrée 35 du récipient 24.

L'anneau d'aspiration 34 est disposé de façon que le flux P de poudre sortant de la sortie 30 du conduit de remplissage 28 passe au travers de l'anneau d'aspiration 34. L'anneau d'aspiration 34 est disposé autour d'un cylindre imaginaire prolongeant la sortie 30 du conduit de remplissage 28.

L'anneau d'aspiration 34 comprend un tube 36 annulaire s'étendant autour d'un axe central B. Le tube 36 présente une forme toroïdale. Le tube 36 est muni d'orifices d'aspiration 38 répartis sur le tube 36 autour de l'axe central B. Les orifices d'aspiration 38 sont disposés sur une partie de la paroi du tube 36 tournée vers l'intérieur de l'anneau d'aspiration 34.

L'anneau d'aspiration 34 comprend un conduit de sortie 40 raccordé au tube 36.

Lorsqu'une force d'aspiration est générée à l'intérieur du tube 36, l'anneau d'aspiration 34 aspire un flux d'air A annulaire.

Lors de l'écoulement de la poudre d'UO₂ du conduit de remplissage 28 vers le récipient 24, des particules de poudre se retrouvent inévitablement en suspension dans l'air environnant.

Avec une force d'aspiration appropriée générée dans l'anneau d'aspiration 34, il est possible de ne pas perturber l'écoulement de la poudre du conduit de remplissage 28 dans le récipient 24 tout en aspirant les particules de poudre en suspension dans l'air autour de la sortie 30 du conduit de remplissage 28. La contamination de l'air environnant est donc limitée efficacement.

Avantageusement, la station de remplissage 22 comprend une canne d'injection de gaz neutre 39 pour inerter le récipient 24 avant et pendant son remplissage par de la poudre d'UO₂. Cette configuration permet d'éviter la mise en contact de la poudre d'UO₂ avec de l'air et de limiter ainsi les risques d'oxydation de la poudre d'UO₂ et d'explosion de poussières. Le gaz neutre injecté est par exemple de l'azote (N₂)

En revenant à la Figure 1, le système d'aspiration 32 comprend une machine d'aspiration 42 pour générer une force d'aspiration. La machine d'aspiration 42 est raccordée au conduit de sortie 40 de l'anneau d'aspiration 34 pour aspirer de l'air par l'intermédiaire de l'anneau d'aspiration 34.

Le système d'aspiration 32 comprend un séparateur de particules 44 pour séparer les particules de poudre de l'air aspiré par l'anneau d'aspiration 34. Le séparateur de particules 44 est ici un séparateur à effet cyclone.

Le système d'aspiration 32 comprend un dispositif de filtrage 46 pour filtrer des particules de poudre présentes dans l'air aspiré.

Dans l'exemple illustré, le dispositif de filtrage 46 est disposé en aval du séparateur de particules 44 et la machine d'aspiration 42 est disposée en aval du dispositif de filtrage 46. Ceci permet de séparer les particules de l'air, puis de filtrer les éventuelles particules restant dans l'air, en limitant la contamination de la machine d'aspiration 42.

La station de remplissage 22 comprend un système de ventilation 48 pour renouveler l'air à l'intérieur de l'enceinte de confinement 26 par aspiration de l'air présent dans l'enceinte de confinement 26.

Le système de ventilation 48 permet de maintenir l'intérieur de la station de remplissage 22 en dépression et d'éviter ainsi toute dissémination de poudre vers l'extérieur de la station de remplissage 22.

Le système de ventilation 48 comprend une machine d'aspiration 50 pour générer une force d'aspiration de l'air présent dans l'enceinte de confinement 26 et un dispositif de filtrage 52 pour filtrer des particules de poudre présentes dans l'air aspiré.

Du fait du système de ventilation 48 fonctionnant par aspiration, de la poudre éventuellement présente dans l'air ambiant de l'enceinte de confinement 26 n'est pas rejetée à l'extérieur, mais aspirée et filtrée par le système de ventilation 48.

Telle qu'illustrée sur la Figure 1, l'enceinte de confinement 26 est une cabine fermée qui délimite un volume fermé. En variante l'enceinte de confinement 26 est une hotte.

L'enceinte de confinement 26 comprend une porte 54 d'accès dont l'ouverture permet d'introduire ou d'extraire un récipient 24 dans ou hors de l'enceinte de confinement 26.

La station de remplissage 22 comprend un système de commande de porte 56 pour commander automatiquement l'ouverture et la fermeture de la porte 54.

L'enceinte de confinement 26 est de préférence équipée d'un dispositif de contrôle de contamination radioactive 57 disposé en partie basse de l'enceinte de confinement 26 pour réaliser un contrôle à l'intérieur de l'enceinte de confinement 26 et notamment détecter une possible contamination par de la matière fissile. Le dispositif de contrôle de contamination radioactive 57 comprend par exemple un détecteur de rayonnement alpha et/ou un dispositif permettant de prélever un échantillon de l'atmosphère présente dans l'enceinte de confinement 26 et de mesurer sa radioactivité.

L'enceinte de confinement 26 peut en outre être équipée d'un système d'alarme 58 comprenant un capteur 60 disposé à l'intérieur de l'enceinte de confinement 26 pour y mesurer la pression. Le système d'alarme 58 comprend une alarme 62 pour émettre un signal d'alarme, de préférence perceptible par un opérateur à l'extérieur de la cabine, en cas de surpression à l'intérieur de l'enceinte de confinement 26.

En option, le système d'alarme 58 de la station de remplissage 22 comprend un capteur 63 disposé dans le conduit d'aspiration du système de ventilation 48 et une alarme 65 configurée pour émettre un signal d'alarme en cas de diminution de la pression de l'air aspiré, signe d'encrassement du dispositif de filtrage 52..

L'alarme 65 associée au capteur 63 est distincte de celle associée au capteur 60 disposé à l'intérieur de l'enceinte de confinement 26. En variante, il s'agit de la même alarme.

Entre la station de remplissage 22 et la sortie 12 du four 6, l'ensemble de conditionnement 20 comprend un distributeur 64 alimenté en poudre d'UO₂ par le four 6 et au moins deux pots de stockage 66 reliés en parallèle au distributeur 64 de manière à alimenter sélectivement un pot de stockage 66 à la fois, chaque pot de stockage 66 étant relié à la station de remplissage 22 pour alimenter la station de remplissage 22 sélectivement à partir d'un des pots de stockage 66 à la fois.

Le distributeur 64 possède une cuve 68 de réception de la poutre d'UO₂.

La station d'alimentation 20 possède un dispositif d'injection de gaz neutre 69 configuré pour injecter un gaz neutre, de préférence de l'azote (N₂) dans le distributeur 64, plus précisément dans la cuve 68 du distributeur 64, afin d'empêcher le dihydrogène gazeux (H₂) injecté au niveau de la sortie 12 de pénétrer dans la cuve 68. En effet, la mise en contact du dihydrogène avec de l'oxygène potentiellement présent dans le distributeur 64 engendre un risque d'explosion d'hydrogène et donc de dissémination de matière fissile (uranium) et de produits nocifs dans l'environnement. Comme illustré sur la Figure 3, la cuve 68 possède une paroi latérale 70, et un fond 72 de préférence plat, et le distributeur 64 comprend une racle 74 pour racler le fond 72 de la cuve 68. La racle 74 est montée rotative par rapport au fond 72 et est couplée à un moteur 76 (Figure 1) d'entraînement de la racle 74.

Le fond 72 de la cuve 68 est muni d'ouvertures de sortie 78, chaque ouverture de sortie 78 alimentant un pot de stockage 66 respectif.

Le distributeur 64 comprend un système de fermeture 80 (Figure 1) respectif associé à chaque ouverture de sortie 78 pour ouvrir ou fermer l'ouverture de sortie 78 respective.

La racle 74 est prévue pour pousser la poudre d'UO₂ reposant sur le fond 72 de la cuve 68 vers les ouvertures de sortie 78 du fait de la rotation de la racle 74.

Telle qu'illustré sur la Figure 3, la paroi latérale 70 est cylindrique circulaire centrée sur un axe central R et le fond 72 comprend plusieurs ouvertures de sortie 78 (ici trois) réparties sur le fond 72. Les ouvertures de sortie 78 sont ici réparties de préférence uniformément sur un cercle imaginaire centré sur l'axe central R.

La racle 74 est montée rotative autour de l'axe central R. La racle 74 comprend au moins un bras de raclage 82 s'étendant radialement et présentant une face de raclage 82A concave.

La concavité de la face de raclage 82A est telle que la face de raclage 82A s'étend radialement vers l'extérieur à partir de l'axe central R en s'éloignant progressivement d'un rayon de référence passant par l'axe central R et l'extrémité de la face de raclage 82A la plus éloignée de l'axe central R, puis en se rapprochant progressivement dudit rayon de référence.

La portion la plus éloignée dudit rayon de référence de chaque face de raclage 82A concave est de préférence située radialement en regard des ouvertures de sortie 78. En d'autres termes, la portion la plus éloignée dudit rayon de référence de chaque face de raclage 82A concave parcourt le cercle imaginaire le long duquel sont situées les ouvertures de sortie 78.

Cette forme permet de ramener la poudre vers les ouvertures de sortie 78 du fait de la rotation de la racle 74. La poudre située vers le centre de la cuve 68 est repoussée vers la périphérie et la poudre située vers la périphérie de la cuve 68 est ramenée vers le centre de la cuve 68.

Ceci permet de réaliser un vidage complet de la cuve 68 sans nécessiter l'arrêt de la production ou de l'alimentation en poudre d'UO₂.

La racle 74 possède ici deux bras de raclage 82 diamétralement opposés. La racle 74 présente en vue suivant l'axe central R une forme en S. En variante, la racle 74 présente un seul bras de raclage 82 ou plus de deux bras de raclage 82.

Dans la configuration présentée la cuve 68 est circulaire, les ouvertures de sortie 78 sont positionnées suivant un cercle, et le mouvement de la racle 74 est circulaire.

De manière plus générale, la cuve 68, les ouvertures de sortie 78 et la racle 74 ont des géométries, des positions et un mouvement adaptés pour permette le vidage complet de la cuve 68 sans nécessiter l'arrêt de la production ou de l'alimentation en poudre d'UO₂.

L'alimentation de chaque pot de stockage 66 est commandée par le système de fermeture 80 commandant l'ouverture de l'ouverture de sortie 78 alimentant ce pot de stockage 66.

Chaque pot de stockage 66 est prévu pour stocker temporairement de la poudre d'UO₂ avant de la transférer vers la station de remplissage 22 lorsque le pot de stockage 66 est plein, la poudre stockée est suffisamment refroidie et un récipient 24 vide est en position pour être rempli.

Chaque pot de stockage 66 est configuré pour le refroidissement de la poudre d'UO₂ reçue dans le pot de stockage 66.

Chaque pot de stockage 66 possède un dispositif de refroidissement par gaz 83 prévu pour générer une circulation de gaz à travers le pot de stockage 66. Le gaz est de préférence un gaz neutre, par exemple de l'azote (N₂). Ceci permet de conserver la poudre d'UO₂ sous atmosphère de gaz neutre et d'assurer son refroidissement.

Chaque dispositif de refroidissement par gaz 83 comprend ici un dispositif d'injection 84 pour injecter du gaz neutre en partie inférieure du pot de stockage 66 et un dispositif de captage et de filtration 86 pour récupérer et filtrer le gaz neutre en partie supérieure du pot de stockage 66.

Avantageusement, le dispositif d'injection 84 est configuré pour une injection du gaz neutre de manière homogène dans la poudre d'UO₂ reçue dans le pot de stockage 66. Ceci permet notamment d'extraire l'humidité résiduelle pouvant être piégée dans la poudre, d'éviter le compactage de la poudre au cours de son refroidissement et ainsi de fluidiser la poudre et faciliter son chargement dans un récipient 24. Pour ce faire, le dispositif d'injection 84 comprend par exemple un diffuseur poreux réalisé en métal fritté.

Chaque pot de stockage 66 possède une sortie commandée par une vanne de sortie 85 commandant l'écoulement de la poudre d'UO₂ à la sortie du pot de stockage 66. La sortie de chaque pot de stockage 66 est raccordée à une vis sans fin de sortie 87 dédiée à ce pot de stockage 66, les vis sans fin de sortie 87 alimentant une vis sans fin de chargement 88 prévue pour alimenter le conduit de remplissage 28 de la station de remplissage 22 avec la poudre d'UO₂.

L'entrée du conduit de remplissage 28 est commandée par une vanne d'entrée 90.

En fonctionnement, le réacteur 4 et le four 6 sont alimentés en continu en gaz réactifs et produisent en continu de la poudre d'UO₂. La poudre d'UO₂ sortant du four 6 est collectée par le distributeur 64 qui distribue la poudre d'UO₂ dans les pots de stockage 66 de manière successive et cyclique. Le distributeur 64 remplit un pot de stockage 66 puis passe au pot de stockage 66 suivant jusqu'à avoir rempli tous les pots de stockage 66, puis recommence de manière cyclique. Les pots de stockage 66 sont vidés au fur et à mesure de leur remplissage, de sorte qu'ils ne sont pas tous pleins simultanément.

La poudre d'UO₂ est refroidie dans chaque pot de stockage 66.

Lorsque la poudre d'UO₂ contenue dans un pot de stockage 66 est refroidie et qu'un récipient 24 est prêt à être rempli, la vanne de sortie 85 de ce pot de stockage 66 est ouverte pour alimenter la vis sans fin de sortie 87 de ce pot de stockage 66, qui alimente à son tour la vis sans fin de chargement 88, qui alimente le conduit de remplissage 28.

Pour l'alimentation d'un pot de stockage 66, la racle 74 est entraînée en rotation et le système de fermeture 80 associé à l'ouverture de sortie 78 alimentant ce pot de stockage 66 est ouvert. Du fait de la rotation de la racle 74, la poudre est poussée vers l'ouverture de sortie 78 ouverte et s'écoule vers le pot de stockage 66.

Du fait de la configuration plate du fond 72 associée à une racle 74, il n'existe pas de zone morte dans le distributeur 64 dans lequel de la poudre d'UO₂ pourrait former un amas. Un tel amas pourrait conduire à une contamination atmosphérique lors d'une intervention de maintenance par un opérateur ou à un risque de criticité.

Le récipient 24 permet de transférer la poudre d'UO₂, par exemple vers une station de pastillage pour former des pastilles d'UO₂ à partir de la poudre d'UO₂, par exemple par frittage. Dans la configuration illustrée, il est nécessaire de retourner le récipient 24 pour le vider et charger la poudre d'UO₂ dans la station de pastillage.

Avantageusement, le distributeur 64 est configuré pour recevoir quatre pots de stockage 66 en parallèle. Pendant que l'un des quatre pots de stockage 66 est en cours de remplissage, le second des quatre pots de stockage 66 est en cours de refroidissement, le troisième des quatre pots de stockage 66 est en cours de vidage et le quatrième des quatre pots de stockage 66 est vide. Le quatrième des quatre pots de stockage 66 reste ainsi disponible en cas d'arrêt non planifié de l'installation de production de poudre de combustible nucléaire 1 pour permettre d'évacuer la totalité de la matière fissile présente dans l'installation de conversion 2 et pour mettre l'installation de conversion 2 en conditions d'arrêt sûr.

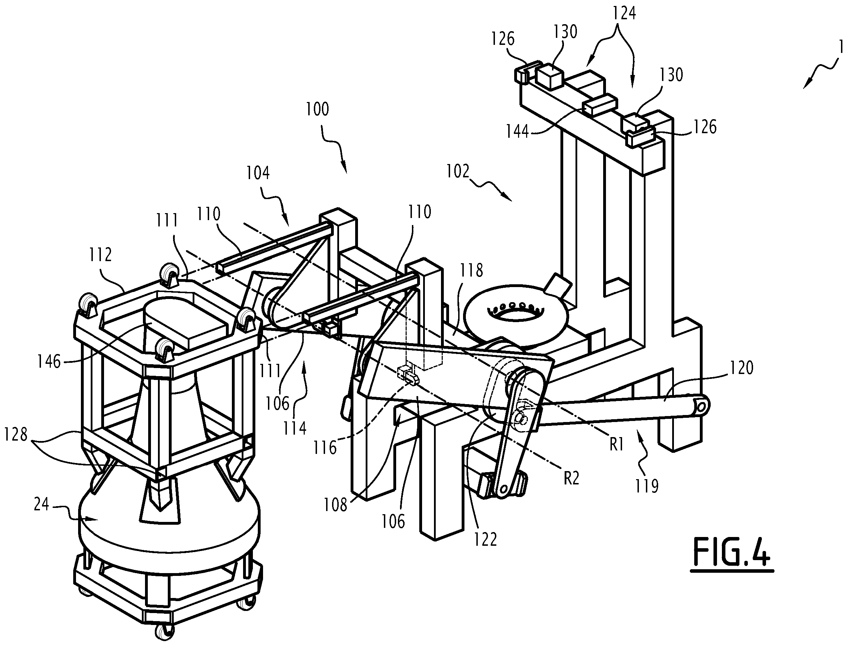

Comme illustré sur la Figure 4, l'installation de production de poudre de combustible nucléaire 1 comprend une station de retournement 100 permettant de retourner et de vider un récipient 24.

La station de retournement 100 comprend un châssis 102, un porte-récipient 104 pour saisir un récipient 24, au moins un bras de levage 106 monté pivotant sur le châssis 102 autour d'un premier axe de rotation R1, le porte-récipient 104 étant monté mobile en rotation sur le bras de levage 106 autour d'une deuxième axe de rotation R2 distinct du premier axe de rotation R1 et parallèle au premier axe de rotation R1, et un mécanisme de retournement 108 pour provoquer une rotation du porte-récipient 104 par rapport au bras de levage 106 uniquement du fait de la rotation du bras de levage 106 par rapport au châssis 102.

Le porte-récipient 104 comprend deux bras de soulèvement 110 prévus pour s'insérer dans des évidements 111 d'un cadre 112 fixé sur le récipient 24.

Le porte-récipient 104 comprend un dispositif de verrouillage 114 comprenant des organes de verrouillage 116 mobiles pour s'insérer dans des évidements (non visibles) du cadre 112 afin de bloquer le récipient 24 en coulissement le long des bras de soulèvement 110.

La station de retournement 100 comprend ici deux bras de levage 106 couplés en rotation par un arbre 118. L'arbre 118 est monté mobile en rotation sur le châssis 102 autour du premier axe de rotation R1, et les bras de levage 106 sont fixés aux extrémités de l'arbre 118, chaque bras de levage 106 étant fixé à une extrémité respective de l'arbre 118.

La station de retournement 100 comprend un système de levage 119 pour faire pivoter les bras de levage 106 autour du premier axe de rotation R1. Le système de levage 119 comprend un actionneur 120 relié aux bras de levage 106 pour les faire pivoter autour du premier axe de rotation R1.

L'actionneur 120 est ici un vérin hydraulique ayant une première extrémité reliée au châssis 102 et une deuxième extrémité opposée à la première extrémité reliée à une bielle 122 liée en rotation aux bras de levage 106. La bielle 122 est ici fixée sur l'arbre 118. En variante, l'actionneur 120 peut être un vérin pneumatique ou un vérin électrique.

Le châssis 102 comprend un dispositif de blocage 124 comprenant des organes de blocage 126 mobiles pour s'insérer dans des évidements de blocage 128 du cadre 112 pour immobiliser le récipient 24 par rapport au châssis 102 lorsque le récipient 24 est en position retournée.

Chaque organe de blocage 126 est commandé par un actionneur de blocage 130 respectif. Tel qu'illustré sur la Figure 4, les organes de blocage 126 sont écartés pour permettre le retournement du récipient 24 et sont rapprochés pour s'insérer dans les évidements de blocage 128 et bloquer le récipient 24 retourné.

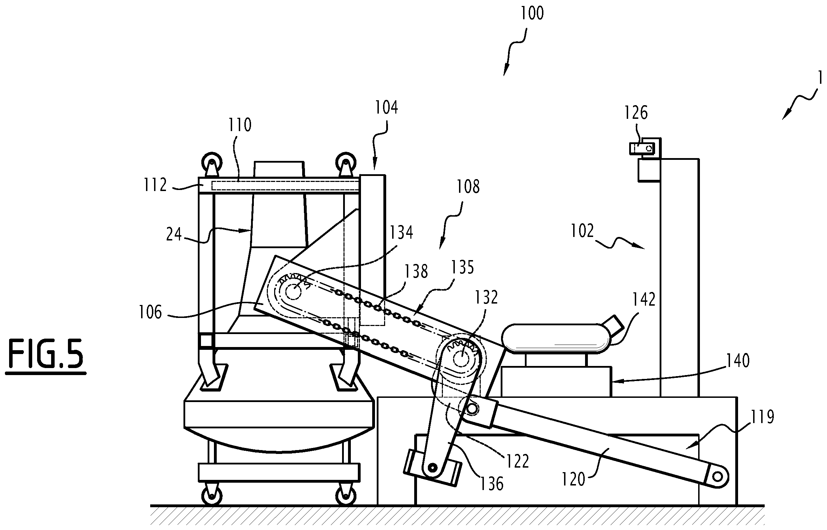

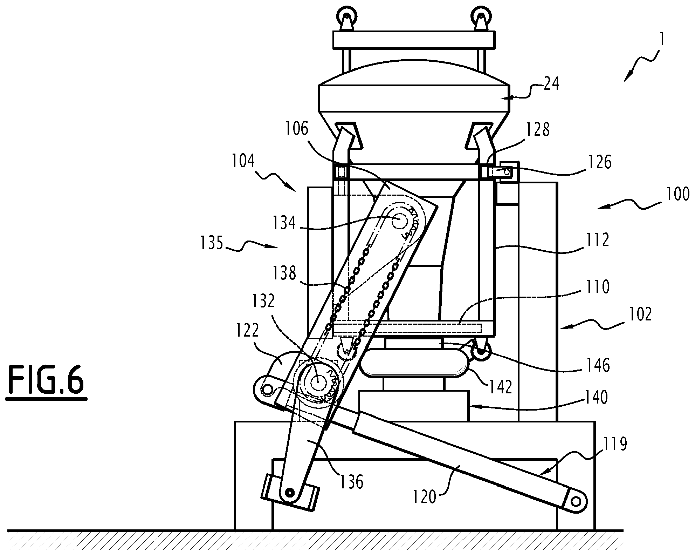

Les Figures 5 et 6 illustrent la station de retournement 100 respectivement dans une position de saisie (Figure 5) permettant de saisir le récipient 24, et une position de retournement (Figure 6) dans laquelle le récipient 24 est retourné. Sur la Figure 6, le récipient 24 est bloqué par le dispositif de blocage 124.

Comme visible sur les Figures 5 et 6, le mécanisme de retournement 108 comprend un premier pignon 132 monté rotatif sur le bras de levage 106 en étant assujetti en rotation au châssis 102, un deuxième pignon 134 monté rotatif sur le bras de levage 106 en étant assujetti en rotation au porte-récipient 104, et un mécanisme d'entraînement 135 reliant le premier pignon 132 au deuxième pignon 134.

Le premier pignon 132 est ici lié en rotation au châssis 102 par l'intermédiaire d'un bras de blocage 136 ayant une extrémité liée en rotation au premier pignon 132 et son autre extrémité fixé sur le châssis 102, de sorte que le bras de blocage 136 et donc le premier pignon 132 sont immobiles en rotation par rapport au châssis 102.

Le mécanisme d'entraînement 135 comprend par exemple une chaîne d'entraînement 138 passant sur le premier pignon 132 et le deuxième pignon 134.

Lors de la rotation du bras de levage 106, le premier pignon 132 pivote par rapport au bras de levage 106, de sorte que le deuxième pignon 134 pivote également par rapport au bras de levage 106. Le deuxième pignon 134 décrit un arc de cercle autour du premier pignon 132 tout en pivotant autour de son axe.

Avec cette configuration de montage de la station de retournement 100, la simple rotation du bras de levage 106 engendre un mouvement épicycloïdal du porte-récipient 104 et du récipient 24. Le porte-récipient 104 décrit un arc de cercle autour de l'axe de rotation R1 en même temps qu'il pivote autour de l'axe de rotation R2. Ceci permet d'obtenir le levage et le retournement du récipient 24 dans un seul et même mouvement. La commande de la rotation du porte-récipient 104 est obtenue de manière simple et facile à mettre en oeuvre.

La station de retournement 100 comprend un receveur 140 pour recevoir la poudre sortant du récipient 24 retourné.

La station de retournement 100 est munie d'un système d'aspiration analogue au système d'aspiration 32 de la station de remplissage 22. Le système d'aspiration de la station de retournement 100 comprend notamment un anneau d'aspiration 142 au travers duquel se déverse la poudre depuis l'ouverture d'entrée 35 du récipient 24 retourné jusqu'à l'entrée du receveur 140. L'anneau d'aspiration 142 est analogue à celui de la station de remplissage 22.

Comme illustré sur la Figure 1, la station de retournement 100 comprend un capteur de présence 144 pour détecter la présence du récipient 24 en position retournée. Le capteur de présence 144 est par exemple un capteur inductif. Le capteur de présence 144 est ici disposé à proximité du dispositif de blocage 124.

Le dispositif de blocage 124 est configuré pour bloquer le récipient 24 en fonction du signal fourni par le capteur de présence 144.

Le récipient 24 est muni d'un système d'ouverture 146 commandant l'ouverture et la fermeture du récipient 24.

La station de retournement 100 est configurée pour commander le système d'ouverture 146 du récipient 24 en fonction du signal fourni par le capteur de présence 144, et en particulier pour commander l'ouverture du récipient 24 seulement lorsque la présence du récipient 24 en position retournée est détectée par le capteur de présence 144.

La station de retournement 100 est configurée pour activer une aspiration par l'intermédiaire de l'anneau d'aspiration 142 en fonction du signal fourni par le capteur de présence 144. L'aspiration par l'intermédiaire de l'anneau d'aspiration 142 est activée seulement lorsque la présence du récipient 24 retourné est détectée.

En option, la station de retournement 100 comprend un joint gonflable pour l'accostage du récipient 24 avec le receveur 140. Ceci permet d'assurer un accostage étanche en tenant compte de tolérances de positionnement.

La station de retournement 100 permet une manipulation du récipient 24 en toute sécurité, avec un minimum d'intervention humaine. En outre, la station de retournement 100 est simple, robuste et facile à nettoyer. Le mécanisme de retournement 108, utilisant un actionneur 120 hydraulique ou pneumatique pour simultanément soulever et retourner le récipient 24, permet un retournement du récipient 24 en douceur, assurant une vidange complète de la poudre d'UO₂, sans laisser de poudre dans le récipient 24 et sans disperser de poudre lors du transvasement de poudre du récipient 24 dans le receveur 140.

L'installation de production de poudre de combustible nucléaire 1 dans son ensemble permet la production et la fourniture de poudre d'UO₂, notamment à une station de production de pastilles d'UO₂, en cours de production et pendant les opérations de maintenance, en limitant la formation d'amas dans l'installation de conversion 2 et en limitant la dispersion de poudre d'UO₂ dans l'atmosphère pendant le vidage et le remplissage des récipients 24.

## Revendications

1. Installation de production de poudre de combustible nucléaire comprenant
- une installation de conversion (2) d'hexafluorure d'uranium (UF₆) en dioxyde d'uranium (UO₂), l'installation de conversion (2) comprenant :
- un réacteur (4) d'hydrolyse pour la conversion d'UF₆ en poudre d'oxyfluorure d'uranium (UO₂F₂) par réaction entre de l'UF₆ gazeux et de la vapeur d'eau sèche injectés dans le réacteur (4) ; et
- un four (6) de pyrohydrolyse pour la conversion de la poudre d'UO₂F₂ en poudre d'UO₂ par réaction de la poudre d'UO₂F₂ avec de la vapeur d'eau sèche et du dihydrogène (H₂) gazeux circulant dans le four (6) ; et
- un ensemble de conditionnement (20) de la poudre d'UO₂, l'ensemble de conditionnement (20) comprenant une station de remplissage (22) d'un récipient (24) avec de la poudre d'UO₂, la station de remplissage (22) comprenant une enceinte de confinement (26), un conduit de remplissage (28) alimenté en poudre d'UO₂ à partir du four (6) et ayant une sortie (30) débouchant dans l'enceinte de confinement (26);
**caractérisée en ce que** la station de remplissage (22) comprend un système d'aspiration (32) comprenant un anneau d'aspiration (34) disposé à la sortie (30) du conduit de remplissage (28) pour aspirer un flux d'air (A) annulaire autour d'un flux (P) de poudre d'UO₂ tombant de la sortie (30) du conduit de remplissage (28) dans le récipient (24).

2. Installation selon la revendication 1, dans laquelle la station de remplissage (22) comprend un système de ventilation (48) pour mettre en dépression l'enceinte de confinement (26) et aspirer et filtrer l'air présent dans l'enceinte de confinement (26).

3. Installation selon la revendication 1 ou 2, dans laquelle l'enceinte de confinement (26) est une cabine comprenant une porte (54) pour introduire ou extraire le récipient (24) dans ou hors de la cabine.

4. Installation selon l'une quelconque des revendications précédentes, comprenant un système d'alarme (58) comprenant un capteur (60) disposé dans l'enceinte de confinement (26) pour mesurer la pression dans l'enceinte de confinement (26) et une alarme (62) pour émettre un signal d'alarme en cas de surpression à l'intérieur de l'enceinte de confinement (26).

5. Installation selon l'une quelconque des revendications précédentes, dans laquelle l'enceinte de confinement (26) est équipée d'un dispositif de contrôle de contamination radioactive (57) disposé dans l'enceinte de confinement (26) pour réaliser un contrôle de la contamination à l'intérieur de l'enceinte de confinement (26).

6. Installation selon l'une quelconque des revendications précédentes, comprenant au moins deux pots de stockage (66) de poudre d'UO₂ et un distributeur (64) pour distribuer la poudre d'UO₂ successivement vers les pots de stockage (66), le conduit de remplissage (28) étant alimenté successivement à partir des pots de stockage (66).

7. Installation selon la revendication 6, dans laquelle le distributeur (64) possède une cuve (68) à fond (72) plat et au moins une racle (74) de raclage du fond (72) de la cuve (68).

8. Installation selon la revendication 7, dans laquelle le distributeur (64) comprend des ouvertures de sortie (78) pour la poudre d'UO₂ ménagées dans le fond (72) de la cuve (68), chaque ouverture de sortie (78) alimentant un pot de stockage (66) respectif.

9. Installation selon l'une quelconque des revendications 6 à 8, comprenant un dispositif d'injection de gaz neutre (69) configuré pour injecter un gaz neutre à l'intérieur du distributeur (64).

10. Installation selon l'une quelconque des revendications précédentes, comprenant une station de retournement (100) pour retourner et vider un récipient (24) rempli d'UO₂.

11. Installation selon la revendication 10, dans laquelle la station de retournement (100) comprend un système d'aspiration comprenant un anneau d'aspiration (142) disposé pour être situé à proximité d'une ouverture d'entrée (35) d'un récipient (24) retourné par la station de retournement (100).

12. Installation selon la revendication 10 ou 11, dans laquelle la station de retournement (100) comprend un châssis (102), un porte-récipient (104) pour saisir un récipient (24), au moins un bras de levage (106) monté pivotant sur le châssis (102) et portant le porte-récipient (104), et un mécanisme de retournement (108) pour commander une rotation du porte-récipient (104) par rapport au bras de levage (106), le mécanisme de retournement (108) étant configuré de telle manière que la rotation du bras de levage (106) par rapport au châssis (102) provoque la rotation du porte-récipient (104) par rapport au bras de levage (106).

13. Installation selon la revendication 12, dans laquelle le mécanisme de retournement (108) comprend un premier pignon (132) monté rotatif sur le bras de levage (106) en étant assujetti en rotation au châssis (102), un deuxième pignon (134) monté rotatif sur le bras de levage (106) en étant assujetti en rotation au porte-récipient (104), et un mécanisme d'entraînement (135) reliant le premier pignon (132) au deuxième pignon (134).

14. Installation selon l'une des revendications 12 et 13, dans laquelle la station de retournement (100) comprend un dispositif de blocage (124) disposé sur le châssis (102) pour bloquer le récipient (24) en position retournée.

15. Installation selon l'une quelconque des revendications 10 à 14, dans laquelle la station de retournement (100) comprend un capteur de présence (144) pour détecter la présence du récipient (24) en position retournée, le récipient (24) comprenant un système d'ouverture (146) pour ouvrir ou fermer le récipient (24), la station de retournement (100) étant configurée pour ouvrir le système d'ouverture (146) seulement lorsque la présence du récipient (24) en position retournée est détectée par le capteur de présence (144).

16. Installation selon l'une quelconque des revendications précédentes, comprenant un joint d'étanchéité (11) disposé à l'entrée (10) du four (6), un joint d'étanchéité (11) disposé à la sortie (12) du four (6) et/ou un joint d'étanchéité (11) disposé entre le réacteur (4) et un dispositif de transfert (18) configuré pour transférer la poudre d'UO₂F₂ du réacteur (4) vers le four (6), l'installation étant configurée pour la mise en pression du ou de chaque joint d'étanchéité (11) avec un gaz neutre.

17. Installation selon l'une quelconque des revendications précédentes, configurée pour l'injection d'un gaz neutre dans le réacteur (4) pour la réalisation de la conversion d'UF₆ en poudre d'UO₂F₂ sous atmosphère de gaz neutre.

18. Installation selon la revendication 16 ou 17, dans laquelle le gaz neutre est de l'azote (N₂).

## Patentansprüche

1. Anlage zur Herstellung von nuklearem Brennstoffpulver, umfassend
- eine Anlage (2) zum Umwandeln von Uranhexafluorid (UFₑ) in Urandioxid (UO₂), die Umwandlungsanlage (2) umfassend:
- einen Reaktor (4) für Hydrolyse zum Umwandeln von UF₆ in Uranoxidfluoridpulver (UO₂F₂) durch Reaktion zwischen gasförmigem UF₆ und trockenem Wasserdampf, der in den Reaktor (4) eingespritzt wird; und
- einen Ofen (6) für Pyrohydrolyse zum Umwandeln von UO₂F₂-Pulver in UO₂-Pulver durch Reaktion des UO₂F₂-Pulvers mit trockenem Wasserdampf und gasförmigem Dihydrogen (H₂), das in dem Ofen (6) zirkuliert; und
- eine Konditionierungsanordnung (20) für das UO₂-Pulver, die Konditionierungsanordnung (20) umfassend eine Füllstation (22) für einen Behälter (24) mit UO₂-Pulver, die Füllstation (22) umfassend einen Einschließungsraum (26), eine Füllleitung (28), die mit UO₂-Pulver aus dem Ofen (6) versorgt wird und einen Auslass (30), der in den Einschließungsraum (26) mündet;
**dadurch gekennzeichnet, dass** die Füllstation (22) ein Saugsystem (32) umfasst, umfassend einen Saugring (34), der an dem Auslass (30) der Füllleitung (28) angeordnet ist, um einen ringförmigen Luftstrom (A) um einen Strom (P) von UO₂-Pulver anzusaugen, der aus dem Auslass (30) der Füllleitung (28) in den Behälter (24) fällt.

2. Anlage nach Anspruch 1, wobei die Füllstation (22) ein Belüftungssystem (48) umfasst, um den Einschließungsraum (26) unter Druck zu setzen und die Luft in dem Einschließungsraum (26) abzusaugen und zu filtern.

3. Anlage nach Anspruch 1 oder 2, wobei der Einschließungsraum (26) eine Kabine ist, umfassend eine Tür (54) zum Einführen oder Herausnehmen des Behälters (24) in die oder aus der Kabine.

4. Anlage nach einem der vorherigen Ansprüche, umfassend ein Alarmsystem (58), umfassend einen in dem Einschließungsraum (26) angeordneten Sensor (60) zum Messen des Drucks in dem Einschließungsraum (26) und einen Alarm (62) zum Ausgeben eines Alarmsignals bei Überdruck innerhalb des Einschließungsraums (26).

5. Anlage nach einem der vorherigen Ansprüche, wobei der Einschließungsraum (26) mit einer in dem Einschließungsraum (26) angeordneten Vorrichtung zum Überwachen radioaktiver Kontamination (57) ausgestattet ist, um eine Überwachung der Kontamination innerhalb des Einschließungsraums (26) durchzuführen.

6. Anlage nach einem der vorherigen Ansprüche, umfassend mindestens zwei Speicherbehälter (66) für UO₂-Pulver und einen Verteiler (64) zum Verteilen des UO₂-Pulvers nacheinander an die Speicherbehälter (66), wobei die Füllleitung (28) nacheinander von den Speicherbehältern (66) aus versorgt wird.

7. Anlage nach Anspruch 6, wobei der Verteiler (64) eine Wanne (68) mit flachem Boden (72) und mindestens einen Abstreifer (74) zum Abstreifen des Bodens (72) der Wanne (68) besitzt.

8. Anlage nach Anspruch 7, wobei der Verteiler (64) Auslassöffnungen (78) für das UO₂-Pulver umfasst, die in dem Boden (72) der Wanne (68) ausgebildet sind, wobei jede Auslassöffnung (78) einen jeweiligen Speicherbehälter (66) versorgt.

9. Anlage nach einem der Ansprüche 6 bis 8, umfassend eine Neutralgas-Einspritzvorrichtung (69), die konfiguriert ist, um ein neutrales Gas in das Innere des Verteilers (64) einzuspritzen.

10. Anlage nach einem der vorherigen Ansprüche, umfassend eine Wendestation (100) zum Wenden und Entleeren eines mit UO₂ gefüllten Behälters (24).

11. Anlage nach Anspruch 10, wobei die Wendestation (100) ein Saugsystem umfasst, umfassend einen Saugring (142), der angeordnet ist, um sich in der Nähe einer Einlassöffnung (35) eines Behälters (24) zu befinden, der von der Wendestation (100) gewendet wird.

12. Anlage nach Anspruch 10 oder 11, wobei die Wendestation (100) einen Rahmen (102), einen Behälterhalter (104) zum Greifen eines Behälters (24), mindestens einen Hebearm (106), der schwenkbar an dem Rahmen (102) montiert ist und den Behälterhalter (104) trägt, umfasst, und einen Wendemechanismus (108) zum Steuern einer Drehung des Behälterhalters (104) in Bezug auf den Hebearm (106), wobei der Wendemechanismus (108) konfiguriert ist, damit die Drehung des Hebearms (106) in Bezug auf den Rahmen (102) eine Drehung des Behälterhalters (104) in Bezug auf den Hebearm (106) bewirkt.

13. Anlage nach Anspruch 12, der Wendemechanismus (108) umfassend ein erstes Zahnrad (132), das drehbar an dem Hebearm (106) montiert ist, indem es drehbar an dem Rahmen (102) befestigt ist, ein zweites Zahnrad (134), das drehbar an dem Hebearm (106) angebracht ist, indem es drehbar an dem Behälterträger (104) befestigt ist, und einen Antriebsmechanismus (135), der das erste Zahnrad (132) mit dem zweiten Zahnrad (134) verbindet.

14. Anlage nach einem der Ansprüche 12 und 13, wobei die Wendestation (100) eine an dem Rahmen (102) angeordnete Arretiervorrichtung (124) zum Arretieren des Behälters (24) in der umgedrehten Position umfasst.

15. Anlage nach einem der Ansprüche 10 bis 14, wobei die Wendestation (100) einen Anwesenheitssensor (144) zum Erfassen der Anwesenheit des Behälters (24) in der umgedrehten Position umfasst, wobei der Behälter (24) ein Öffnungssystem (146) zum Öffnen oder Schließen des Behälters (24) umfasst, wobei die Wendestation (100) konfiguriert ist, um das Öffnungssystem (146) nur dann zu öffnen, wenn die Anwesenheit des Behälters (24) in der umgedrehten Position durch den Anwesenheitssensor (144) erfasst wird.

16. Anlage nach einem der vorherigen Ansprüche, umfassend eine Dichtung (11), die an dem Einlass (10) des Ofens (6) angeordnet ist, eine Dichtung (11), die an dem Auslass (12) des Ofens (6) angeordnet ist, und/oder eine Dichtung (11), die zwischen dem Reaktor (4) und einer Übertragungsvorrichtung (18) angeordnet ist, die konfiguriert ist, um das UO₂F₂-Pulver aus dem Reaktor (4) in den Ofen (6) zu übertragen, wobei die Anlage konfiguriert ist, damit die oder jede Dichtung (11) mit einem neutralen Gas unter Druck gesetzt wird.

17. Anlage nach einem der vorherigen Ansprüche, die zur Injektion eines neutralen Gases in den Reaktor (4) zum Durchführen der Umwandlung von UF₆ in UO₂F₂-Pulver unter einer neutralen Gasatmosphäre konfiguriert ist.

18. Anlage nach Anspruch 16 oder 17, wobei das neutrale Gas Stickstoff (N₂) ist.

## Claims

1. Installation for the production of nuclear fuel powder comprising
- a conversion installation (2) for the conversion of uranium hexafluoride (UF₆) into uranium dioxide (UF₆), the conversion installation (2) comprising:
- a hydrolysis reactor (4) for the conversion of UF₆ into uranium oxyfluoride powder (UO₂F₂) by reaction between gaseous UF₆ and dry water vapor injected into the reactor (4); and
- a pyrohydrolysis furnace (6) for converting the UO₂F₂ powder into UO₂ powder by reacting the UO₂F₂ powder with dry water vapor and gaseous hydrogen (H₂) circulating in the furnace (6); and
- a packaging unit (20) for the UO₂ powder, the packaging unit (20) comprising a filling station (22) of a container (24) with UO₂ powder, the filling station (22) comprising a containment chamber (26), a filling duct (28) supplied with UO₂ powder from the furnace (6) and having an outlet (30) opening into the containment chamber (26);
**characterized in that** the filling station (20) comprises a suction system (32) comprising a suction ring (34) disposed at the outlet (30) of the filling duct (28) for sucking an annular air flow (A) around a stream (P) of UO₂ powder falling from the outlet (30) of the filling duct (28) into the container (24).

2. Installation according to claim 1, wherein the filling station (22) comprises a ventilation system (48) for depressurizing the chamber (26) and sucking and filtering the air present in the chamber (26).

3. Installation according to claim 1 or 2, wherein the containment chamber (26) is a cabin comprising a door (54) for introducing or extracting the container (24) in or out of the cabin.

4. Installation according to any one of the preceding claims, comprising an alarm system (58) comprising a sensor (60) disposed in the chamber (26) for measuring the pressure in the containment chamber (26) and an alarm (62) to emit an alarm signal in the event of an overpressure inside the chamber (26).

5. Installation according to any one of the preceding claims, wherein the containment chamber (26) is equipped with a radioactive contamination control device (57) disposed in the containment chamber (26) to achieve a control of contamination inside the containment chamber (26).

6. Installation according to any one of the preceding claims, comprising at least two storage jars (66) for UO₂ powder and a distributor (64) for distributing the UO₂ powder successively to the storage jars (66), the filling duct (28) being supplied successively from the storage jars (66).

7. Installation according to claim 6, wherein the distributor (64) has a tank (68) with a flat bottom (72) and at least one scraper (74) for scraping the bottom (72) of the tank (68).

8. - Installation according to claim 7, wherein the distributor (64) comprises outlet openings (78) for the UO₂ powder formed in the bottom (72) of the tank (68), each outlet opening (78) supplying a respective storage jar (66).

9. Installation according to any one of claims 6 to 8, comprising a neutral gas injection device (69) designed to inject an inert gas inside the distributor (64).

10. Installation according to any one of the preceding claims, comprising a turning station (100) for inverting and emptying a container (24) filled with UO₂.

11. Installation according to claim 10, wherein the turning station (100) comprises a suction system comprising a suction ring (142) disposed to be located near an inlet opening (35) of a container (24) inverted by the turning station (100).

12. Installation according to claim 10 or 11, wherein the turning station (100) comprises a frame (102), a container holder (104) for gripping a container (24), at least one lifting arm (106) pivotally mounted on the frame (102) and carrying the container holder (104), and a turning mechanism (108) for controlling rotation of the container holder (104) relative to the lifting arm (106), the turning mechanism (108) being so designed that rotation of the lifting arm (106) relative to the frame (102) causes the container holder (104) to rotate relative to the lifting arm (106).

13. Installation according to claim 12, wherein the turning mechanism (108) comprises a first pinion (132) rotatably mounted on the lifting arm (106) while being rotatably secured to the frame (102), a second pinion (134) rotatably mounted on the lifting arm (106) while being rotatably secured to the container holder (104), and a drive mechanism (135) connecting the first pinion (132) to the second pinion (134).

14. Installation according to one of claims 12 and 13, wherein the turning station (100) comprises a locking device (124) disposed on the frame (102) for locking the container (24) in the inverted position.

15. Installation according to any one of claims 10 to 14, wherein the turning station (100) comprises a presence sensor (144) for detecting the presence of the container (24) in the inverted position, the container (24) comprising an opening system (146) for opening or closing the container (24), the inverting station (100) being designed to open the opening system (146) only when the presence of the container (24) in the inverted position is detected by the presence sensor (144).

16. Installation according to any one of the preceding claims, comprising a seal (11) disposed at the inlet (10) of the furnace (6), a seal (11) disposed at the outlet (12) of the furnace (6) and/or a seal (11) disposed between the reactor (4) and a transfer device (18) designed to transfer the UO₂F₂ powder from the reactor (4) to the furnace (6), the installation being designed for pressurizing the or each seal (11) with an inert gas.

17. Installation according to any one of the preceding claims, designed for the injection of an inert gas into the reactor (4) for carrying out the conversion of UF₆ into UO₂F₂ powder in an inert gas atmosphere.

18. Installation according to claim 16 or 17, wherein the inert gas is nitrogen (N₂).
